# EUROPEAN PATENT SPECIFICATION

(11) **EP 3 605 793 B1**
(45) Date of publication and mention of the grant of the patent: **30.03.2022**
(21) Application number: 19189342.9
(22) Date of filing: 31.07.2019
(51) Int. Cl.: H02J 50/12, H01F 27/36, H01F 38/14, H01F 27/02, H01F 27/40

(54) **INDUCTIVE COUPLING DEVICE AND ELECTRONIC TRANSFORMER ASSOCIATED THEREWITH**
INDUKTIVE KOPPLUNGSEINRICHTUNG UND DAMIT VERBUNDENER ELEKTRONISCHER TRANSFORMATOR
DISPOSITIF DE COUPLAGE INDUCTIF ET TRANSFORMATEUR ÉLECTRONIQUE ASSOCIÉ

(30) Priority: 01.08.2018 ES 201830800
(43) Date of publication of application: 05.02.2020
(73) Proprietor: Fundación Circe - Centro de Investigacion de Recursos y Consumos Energéticos, 50018 Zaragoza (ES)
(72) Inventor: SANZ OSORIO, José Francisco, 50018 Zaragoza (ES); PERIÉ BUIL, Juan Manuel, 50018 Zaragoza (ES); ACERETE HALLI, Rubén, 50018 Zaragoza (ES); MUÑOZ-CRUZADO ALBA, Jesús, 50018 Zaragoza (ES); VILLA GAZULLA, Juan Luis, 50018 Zaragoza (ES)
(74) Representative: Isern Patentes y Marcas S.L.

(56) References cited:
- GB-A- 2 346 509
- US-A- 4 940 921

## Description

### OBJECT OF THE INVENTION

The object of the invention falls within the technical field of physics, more specifically in the technical field of electrical conversion.

The object of the invention enables a coupling by air or dielectric medium for multilevel power converters in applications of level adjustment of very high DC and AC voltage to be provided.

### BACKGROUND OF THE INVENTION

Today applications that use power conversion are commonly used, applications in which conventional transformers with a magnetic or ferromagnetic core are normally used. On the one hand, this type of transformer represents a very significant part of the total volume and weight of the solid-state transformer and, therefore, it is a limiting factor with respect to the scaling and transport possibilities of this type of device. On the other hand, they require a very complex design in order to ensure isolation when scaled to very high voltages. Likewise, the magnetic core must be electrically isolated from the primary winding and the secondary winding to prevent the occurrence of arcs and ensure that a galvanic isolation is provided.

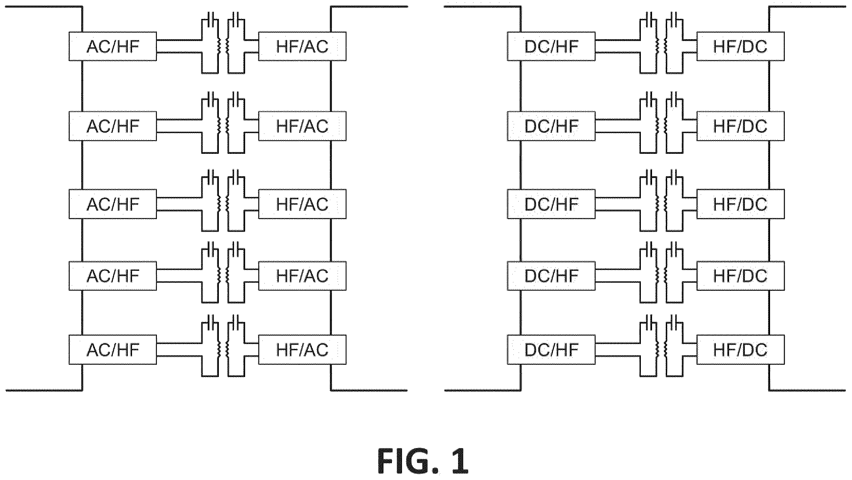

An electronic transformer is a special type of multilevel electronic power converter. This type of device provides a transfer of power between the inlet and outlet of the converter, in which different voltage and/or frequency levels are set. It is made up of a succession of independent modules with cascade interconnection to the inlet thereof, as can be seen in the following Figure 1, and the outlets corresponding to each module can be grouped in series or in parallel depending on the voltage level required at the outlet:
Figure 1: Cascade grouping of a multilevel power converter.

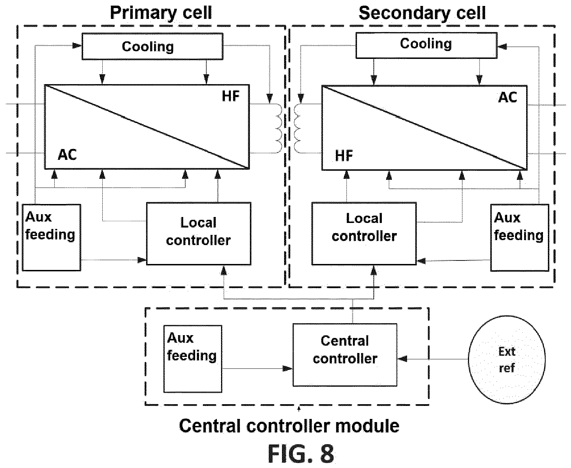

In turn, each cell is independently formed by three stages: The first stage "Inlet/HF" is an electronic power converter that adapts the inlet current to a high frequency alternating current. The second module "HF/HF" is a high frequency coupling that provides galvanic isolation and adapts the inlet voltage level to the desired outlet level by means of a transformation ratio. Lastly, the module "HF/Outlet" adapts the high frequency outlet current of the second module to the voltage and frequency levels required at the outlet of the converter. Within each cell there are several subsystems to equip the system with full functionality, represented in the right portion of Figure 8. In addition to the high frequency power conversion and inductive coupling stage, each subcell, primary and secondary, has the following subsystems: A cooling system, a local controller, and an auxiliary feeding system for the electronics and other subsystems. In addition, the local controllers receive the suitable control setpoints from a master that is external to the cell. The couplings between the modules are normally carried out using a HF transformer with a closed magnetic core.

Furthermore, inductive charging applications are known for electric cars, for example, in which inductive power transmission through air is used; that is, this technology is used for power transfer, without taking into account voltage adjustment, in order to provide a wireless power link. The topologies used in wireless charging systems are different from those proposed in solid-state transformer applications mainly due to the fact that the latter require much higher voltages.

US 4,940,921 A discloses a transformer comprising a primary winding and a split secondary winding mounted on a ferrite E core. An oversized dielectric film is disposed to separate the primary and the secondary windows.

GB 2 346 509 A discloses an assembly wherein a receiver and transmitter toroid assemblies are moulded in separate sections on a drill collar but separated therefrom by a dielectric material.

### DESCRIPTION OF THE INVENTION

The object of the invention enables a voltage adjustment stage to be provided in applications of electronic transformers.

The object of the invention enables a coupling by air or dielectric medium for multilevel power converters in applications for level adjustment of very high DC/DC, DC/AC and AC/AC voltage (Solid-State Transformers) to be provided.

The object of the invention is based on the inclusion of an electric isolation in the magnetic circuit of the transformer, instead of between the electrical conductors and the monolithic or closed core, as is the case conventionally.

In the object of the invention, each individual cell is linked with the corresponding shielding system; to do so, a housing made up of two halves can be used, which together surround the conductors of the coupling, made of a material with high magnetic permeability (ferrite or similar), contained in a box made of a material with high electrical conductivity (aluminium, copper or similar). Both the coil of the primary and the secondary are arranged in accordance with a planar distribution. Moreover, each coil of the primary and secondary windings can be independent, such that each cell stack is not only modular, but each coil is also easily and individually replaceable. At least one layer of dielectric material is arranged between the primary and the secondary, which provides isolation between the two portions of the coupling or a sufficient distance in the air that provides the required level of isolation.

The object of the invention envisages an embodiment in which there is a magnetic core physically split and separated by the dielectric layer. An example not covered by the invention is as well herein disclosed in which a large portion of the ferromagnetic material is removed, leaving a magnetic circuit formed almost completely by air or dielectric material.

### DESCRIPTION OF THE DRAWINGS

In order to complement the description being made and with the object of helping to better understand the characteristics of the invention, said description is accompanied, as an integral part thereof, by a set of drawings where, in an illustrative and non-limiting manner, the following has been represented:
Figure 1 shows a view of the modular cascade topology.
Figures 2a - 2c show a series of diagrams in which the current arrangement of the winding with a closed core transformer (2a) can be observed, in addition to a possible embodiment of the object of the invention that consist of a split ferromagnetic core coupling (2b) or a example not covered by the invention without ferromagnetic material (2c), with a separation in both cases through a dielectric material.
Figure 3 shows an electrical diagram of a WPT (Wireless Power Transfer) cell with SS topology.
Figures 4a-4c show a transverse cross section of the inductive coupling indicating the most important dimensions. Two variants of the cross section of the ferromagnetic core are shown for the variant 2b and a transverse cross section for the variant 2c.

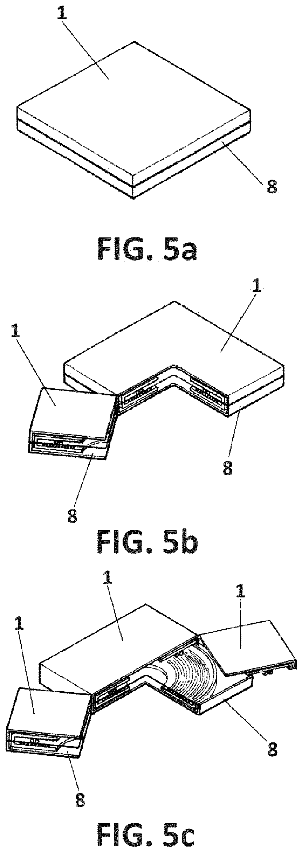

Figure 5a-5c show views of the inductive coupling of the variant 2b where Figure 5a shows a full view of the coupling, Figure 5b shows the coupling with a transverse cross section of a quarter and Figure 5c with a longitudinal cross section to show the arrangement of the winding under the housing of high electrical conductivity.
Figures 6a-6b show a series of exploded views in which all the layers in the structure can be seen.

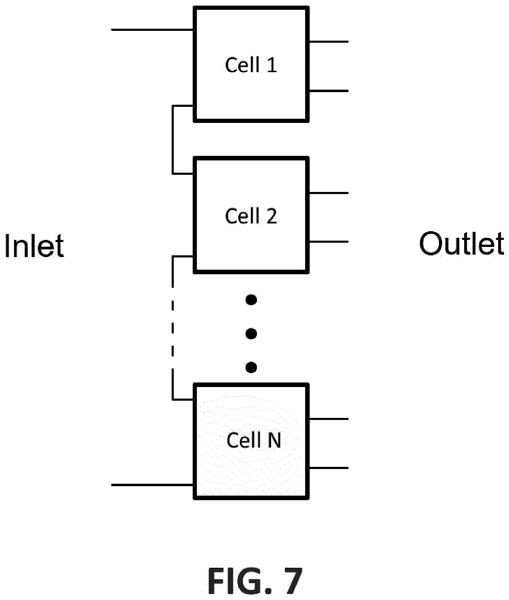

Figure 7 shows a diagram of the cell arrangement.
Figure 8 shows a diagram in which the distribution of the different modules can be seen.

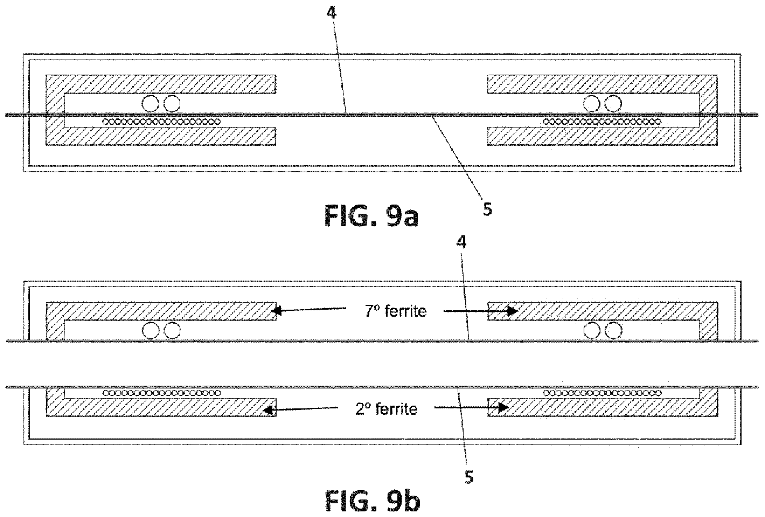

Figures 9a and 9b shows a cross-sectional view of the object of the invention in a coupling position (9) and a separated coupling position (9b).

### PREFERRED EMBODIMENT OF THE INVENTION

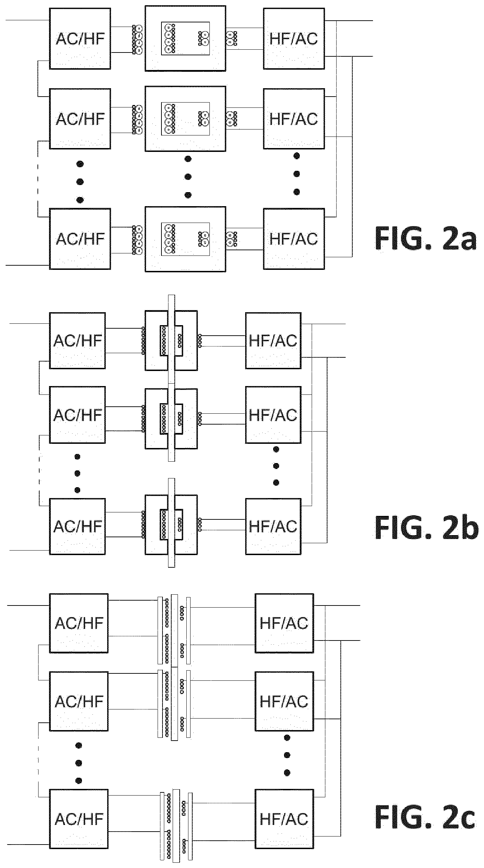

In implementing the object of the invention, contrary to the known state of the art represented in Figure 2a in which there is an arrangement of the winding with a closed core transformer, and to the example not covered by the invention represented in Figure 2c in which the coupling is carried out through a magnetic circuit almost completely formed by air or a dielectric material, there is an embodiment in which there is a split ferromagnetic core coupling shown in Figure 2b. In any of the possible embodiments of the object of the invention a dielectric material arranged between the two portions of the magnetic circuit is used.

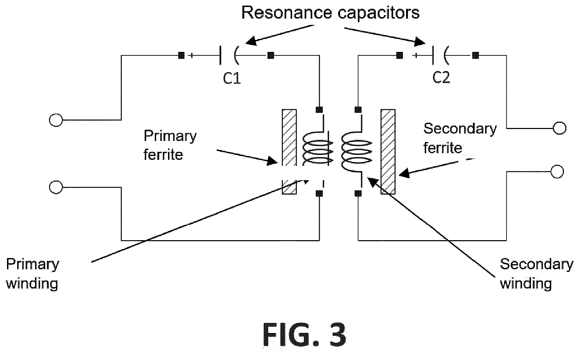

The object of the invention can use a WPT cell with a SS topology for the inductive coupling. Therefore, the cited coupling would correspond, in this possible embodiment, to a diagram such as the one shown in Figure 3, where resonance capacitors (C1, C2) can be seen, which are present in both the side of the primary winding (3) and the side of the secondary winding (6), placed in a series configuration. Said Figure 3 shows the coils of the primary winding (3) and the coils of the secondary winding (6), conventionally facing each other for a correct channelling of the magnetic flux. Lastly, it indicates the arrangement of the magnetic core (10) formed by ferrites on the inner side of the primary winding (3) and the secondary winding (6) for the improved channelling of the magnetic flux.

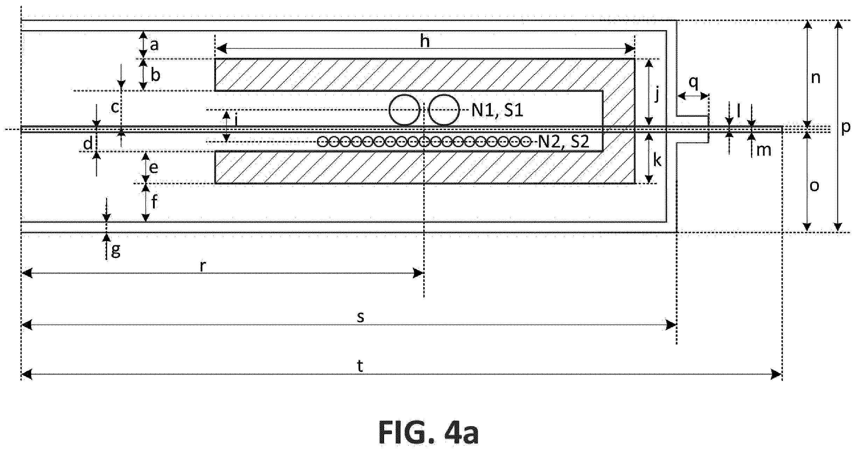

The object of the invention can have a structure such as the one shown in Figures 4a-4c, where it shows a transverse cut of one of the symmetrical halves of the structure, as well as the main measurements to be considered, wherein the values a, b, c, d, e, f, g, h, i, j, k, l, m, n, o, p, q, r, s, t, u, v, N1, S1, N2, and S2 are adjusted depending on the requirements of the system, the lower case letters representing distances, and the upper case letters representing the number of spirals and the size of the cross section thereof. Following said diagram, it is held that the primary winding (3) comprises first turns (N1) each having a first cross section (S1), while the secondary winding (6) comprises second turns (N2) each having a second cross section (S2).

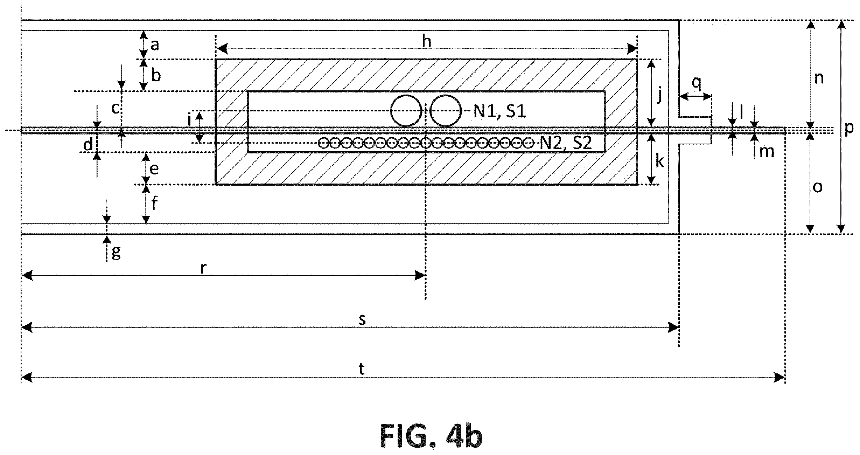

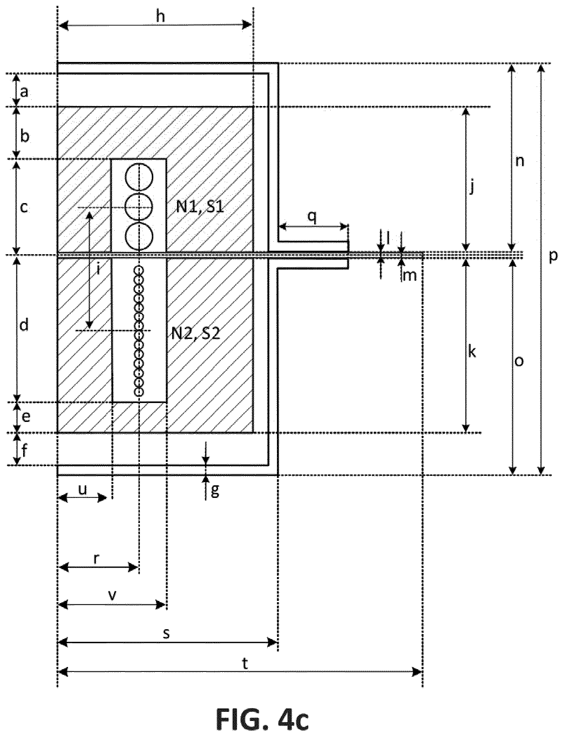

The device of the invention must be arranged in a housing by way of metal casing, preferably made of aluminium with a cylindrical shape, a radius s, height p, and thickness g, physically divided into two halves by at least one layer of dielectric material (4, 5) with thicknesses I and m as shown in Figure 4, wherein it has a first layer of dielectric material (4) with a thickness I and a second layer of dielectric material (5) with a thickness m, In the sides of the primary winding (3) and secondary winding (6) respectively, as shown in Figure 4.

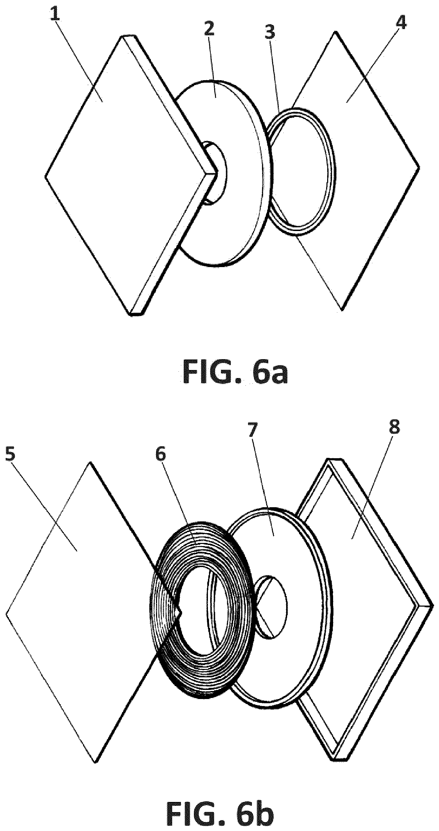

There thus being a structure as observed in Figure 4 or in Figures 6a-6b, with height n in the primary side, and another with height o in the secondary side. The object of the invention must be defined inside a metal housing comprising an upper layer (1) and a lower layer (8) and which can have a side protrusion q, as shown in Figure 4, such that at least one of the layers of dielectric material (4, 5) projects from the metal housing, each side reaching a total length 2t, with the aim that this layer joins to the next layer of dielectric material of the modules surrounding the power converter. Therefore, in general, a single continuous layer of dielectric material remains which reduces the cutoff distance between the primary and secondary.

Inside, there will be placed at respective heights a and f with respect to the box in the sides thereof corresponding to the primary winding (3), primary side, and the secondary winding (6), secondary side, the first element of ferromagnetic material (2) necessarily being disc-shaped, with a thickness b and e in the primary and secondary sides, respectively. This disc of ferromagnetic material can be hollow in the central portion thereof (embodiments shown in Figures 4a and 4b) and is centred at a distance r from the centre of the structure defined by the assembly of elements in the housing, and with a section having a length h, having a height j in the primary side and k in the secondary side. Likewise, the first turns (N1) of the primary winding (3), and the second turns (N2) of the secondary winding (6) are also located centred at a distance r from the centre of the structure. Lastly, the distance i is defined as the distance between the two windings (3, 6), and the distances c and d define the distance between the inner face of the ferromagnetic core (11) and the edge of the half of the structure for the primary winding (3) and secondary winding (6) respectively.

As seen in Figure 6, the inductive coupling or coupling device of the invention has a series of elements arranged in a sandwich-type structure in light of the cross section of said Figure 6 where there is an upper layer (1) that delimits the housing and therefore the upper portion of the device, of the coupling device of the invention wherein the primary winding (3) is preferably arranged. This upper layer (1) can have an inner isolating coating to prevent the occurrence of an electric arc with the corresponding winding. Likewise, a lower layer (8) is the portion of the housing that corresponds to the lower side of the coupling device of the invention where the secondary winding (6) of the coupling is preferably located. The housing and therefore the layers (1, 8) thereof are preferably aluminium, copper or similar. The cited first element of ferromagnetic material (2) and a second element of ferromagnetic material (7), necessarily disc-shaped in the present invention, are respectively arranged with respect to the primary winding (3) and the secondary winding (6). Then, in the cited figure, there is arranged the first winding (3), which is the coil-shaped copper coil of the primary stage, and in an equivalent manner there is the second winding (6), which is the coil-shaped copper winding of the secondary stage. Said windings (3, 6) must necessarily be arranged with a planar distribution (as can be seen in Figure 2b, corresponding to Figures 4a and 4b) in the present invention; other possibilities like an axial distribution (as can be seen in 2c, corresponding to Figure 4c) are not covered by the present invention. Lastly, it is held that the first dielectric layer (4) and the second dielectric layer (5) can be manufactured from a high-density dielectric insulating material, these being locating in relation to the first winding (3) and to the second winding (6), respectively, such that two independent halves of the structure delimited by the layers (1, 8) of the housing are defined.

The coupling device of the invention has a special application in electronic transformers, as an example of said application, an object of the invention is an electronic transformer comprising: a first electronic power converter module (Inlet/HF) intended to adapt the inlet current to a high-frequency alternating current, a second "HF/HF" module intended to provide galvanic isolation and adapt the voltage level of the inlet voltage to the desired outlet level by means of a transformation ratio, and an outlet module (HF/Outlet) intended to adapt the high-frequency outlet current of the second module to the voltage and frequency levels required at the outlet of the converter, the above-described inductive coupling device being located in the second module.

## Claims

1. An inductive coupling device comprising:
a. a metal housing comprising an upper layer (1) and a lower layer (8),
b. a primary comprising:
i. a first winding (3) with first turns (N1) each having a first cross section (S1), located adjacent to the upper layer (1) of the housing, and
ii. a first element of ferromagnetic material (2) arranged between the first winding (3) and the upper layer (1), and
c. a secondary comprising:
i. a second winding (6) with second turns (N2) each having a second cross section (S2), and
ii. a second element of ferromagnetic material (7) arranged between the second winding (6) and the lower layer (8) of the housing,
d. at least one layer of dielectric material (4,5) arranged between the first winding (3) and the second winding (6), separating the upper layer (1) and the lower layer (8),
wherein the first element of ferromagnetic material (2) and the second ferromagnetic material (7) correspond to portions of a ferromagnetic core (11) of the inductive coupling device,
**characterised in that** the first and second windings (3, 6) have a planar distribution and the first and second elements of ferromagnetic material (2, 7) are disc-shaped.

2. The inductive coupling device according claim 1, further comprising resonance capacitors (C1, C2) respectively linked to the windings (3,6).

3. The inductive coupling device according to claims 1 or 2, wherein at least one of: the upper layer (1) and the lower layer (8), comprises an inner insulating coating to prevent the occurrence of an electric arc with the corresponding winding.

4. An electronic transformer comprising an inductive coupling device such as that described in any one of claims 1 to 3.

5. A cell comprising
a. a first electronic power converter module (AC/HF) intended to adapt an inlet signal to a high frequency signal,
b. a second module (HF/HF) comprising the electronic transformer of claim 4 and intended to provide galvanic isolation and adapt the voltage level of the inlet voltage to the desired outlet level by means of a transformation ratio, and
c. an outlet module (HF/AC) intended to adapt the high frequency outlet signal of the second module to the voltage and frequency levels required.

## Patentansprüche

1. Induktive Kopplungsvorrichtung, umfassend:
a. ein Metallgehäuse, umfassend eine obere Schicht (1) und eine untere Schicht (8),
b. ein Primär, umfassend:
i. eine erste Wicklung (3) mit ersten Windungen (N1), die jeweils einen ersten Querschnitt (S1) aufweisen und benachbart zu der oberen Schicht (1) des Gehäuses angeordnet sind, und
ii. ein erstes Element aus ferromagnetischem Material (2), das zwischen der ersten Wicklung (3) und der oberen Schicht (1) angeordnet ist, und
c. ein Sekundär, umfassend:
i. eine zweite Wicklung (6) mit zweiten Windungen (N2), die jeweils einen zweiten Querschnitt (S2) aufweisen, und
ii ein zweites Element aus ferromagnetischem Material (7), das zwischen der zweiten Wicklung (6) und der unteren Schicht (8) des Gehäuses angeordnet ist,
d. mindestens eine Schicht aus dielektrischem Material (4,5), die zwischen der ersten Wicklung (3) und der zweiten Wicklung (6) angeordnet ist und die obere Schicht (1) und die untere Schicht (8) trennt,
wobei das erste Element aus ferromagnetischem Material (2) und das zweite ferromagnetische Material (7) Abschnitten eines ferromagnetischen Kerns (11) der induktiven Kopplungsvorrichtung entsprechen,
**dadurch gekennzeichnet, dass** die erste und die zweite Wicklung (3, 6) eine planare Verteilung aufweisen und das erste und das zweite Element aus ferromagnetischem Material (2, 7) scheibenförmig sind.

2. Induktive Kopplungsvorrichtung nach Anspruch 1, ferner umfassend Resonanzkondensatoren (C1, C2), die jeweils mit den Wicklungen (3, 6) verbunden sind.

3. Induktive Kopplungsvorrichtung nach Anspruch 1 oder 2, wobei mindestens eine von: der oberen Schicht (1) und der unteren Schicht (8) eine innere isolierende Beschichtung umfasst, um das Auftreten eines Lichtbogens mit der entsprechenden Wicklung zu verhindern.

4. Elektronischer Transformator mit einer induktiven Kopplungsvorrichtung wie in einem der Ansprüche 1 bis 3 beschrieben.

5. Zelle, umfassend
a. ein erstes elektronisches Leistungswandlermodul (AC/HF), das dazu bestimmt ist, ein Eingangssignal an ein Hochfrequenzsignal anzupassen,
b. ein zweites Modul (HF/HF), das den elektronischen Transformator nach Anspruch 4 umfasst und dazu bestimmt ist, eine galvanische Trennung bereitzustellen und den Spannungspegel der Eingangsspannung mittels eines Übersetzungsverhältnisses an den gewünschten Ausgangspegel anzupassen, und
c. ein Ausgangsmodul (HF/AC), das dazu bestimmt ist, das Hochfrequenzausgangssignal des zweiten Moduls an die erforderlichen Spannungs- und Frequenzpegel anzupassen.

## Revendications

1. Dispositif de couplage inductif comprenant :
a. un boîtier métallique comprenant une couche supérieure (1) et une couche inférieure (8),
b. un primaire comprenant :
i. un premier bobinage (3) avec des premières spires (N1) ayant chacune une première section transversale (S1), situé adjacent à la couche supérieure (1) du boîtier, et
ii. un premier élément en matériau ferromagnétique (2) agencé entre le premier bobinage (3) et la couche supérieure (1), et
c. un secondaire comprenant :
i. un second bobinage (6) avec des secondes spires (N2) ayant chacune une seconde section transversale (S2), et
ii. un second élément en matériau ferromagnétique (7) agencé entre le second bobinage (6) et la couche inférieure (8) du boîtier,
d. au moins une couche en matériau diélectrique (4, 5) agencée entre le premier bobinage (3) et le second bobinage (6), séparant la couche supérieure (1) et la couche inférieure (8),
dans lequel le premier élément en matériau ferromagnétique (2) et le second matériau ferromagnétique (7) correspondent à des portions d'un noyau ferromagnétique (11) du dispositif de couplage inductif,
**caractérisé en ce que** les premier et second bobinage (3, 6) ont une distribution plane et les premier et second éléments en matériau ferromagnétique (2, 7) sont en forme de disque.

2. Dispositif de couplage inductif selon la revendication 1, comprenant en outre des condensateurs de résonance (C1, C2) respectivement reliés aux bobinages (3, 6).

3. Dispositif de couplage inductif selon les revendications 1 ou 2, dans lequel au moins l'une de : la couche supérieure (1) et la couche inférieure (8), comprend un revêtement isolant interne pour empêcher l'apparition d'un arc électrique avec le bobinage correspondant.

4. Transformateur électronique comprenant un dispositif de couplage inductif tel que celui décrit dans l'une quelconque des revendications 1 à 3.

5. Cellule comprenant
a. un premier module convertisseur électronique de puissance (CA/HF) destiné à adapter un signal d'entrée à un signal haute fréquence,
b. un second module (HF/HF) comprenant le transformateur électronique de la revendication 4 et destiné à assurer une isolation galvanique et à adapter le niveau de tension de la tension d'entrée au niveau de sortie souhaité au moyen d'un rapport de transformation, et
c. un module de sortie (HF/CA) destiné à adapter le signal haute fréquence de sortie du second module aux niveaux de tension et de fréquence requis.
